# EUROPEAN PATENT APPLICATION

(11) **EP 1 304 188 A2**
(43) Date of publication of application: **23.04.2003**
(21) Application number: 02020873.2
(22) Date of filing: 18.09.2002
(51) Int. Cl.: B23Q 1/62, B23Q 3/18, B23Q 7/04, B27C 7/00, B23Q 1/28

(54) **A method and a machine for machining components made of wood or the like**

(30) Priority: 19.10.2001 IT BO20010643
(71) Applicant: IMPRESA 2000 DI SACCHI PARIDE E C. s.a.s., 47900 Rimini (IT)
(72) Inventor: Sacchi, Paride, 47900 Rimini (IT)
(74) Representative: Jorio, Paolo

(57) **Abstract**

During a step of tooling of a machine for machining components (2) made of wood, which is provided with two longitudinal guides (5), cross members (13) extending between the two guides (5), and at least one clamping device (18; 32) for clamping a component (2) mounted on each of the cross members (13), the cross members (13) are displaced independently of one another along the guides (5), and the clamping devices (18; 32) are displaced independently of one another along the respective cross members (13) according to the shape and dimensions of the component (2) and/or to the machining to be carried out; the cross members (13) being displaced along the guides (5) according to respective mutually identical first laws of motion, and the clamping devices (18; 32) being displaced along the corresponding cross members (13) according to respective mutually identical second laws of motion during a subsequent machining step, in which the component (2) comes into contact with a tool (11a).

## Description

The present invention relates to a method for machining components made of wood or the like.

In the sector of machining of components made of wood, it is known to provide a machine comprising two longitudinal guide members, which support a plurality of cross members that are arranged at a given distance from one another so as to define between them openings designed for enabling dropping of shavings and saw dust, and are coupled in a slidable way to the aforesaid longitudinal members for performing rectilinear displacements along said longitudinal members and under the thrust of respective first actuator devices in a first given direction.

The cross members support a plurality of clamping devices, which are provided with respective plane surfaces that are mutually co-planar and define, as a whole, a substantially horizontal resting surface designed to support at least one component to be machined and are coupled in a slidable way to the corresponding cross members to perform rectilinear displacements along said corresponding cross members and under the thrust of respective second actuator devices in a second direction that is substantially transverse to the first direction.

Generally, during an initial step of tooling of the machine, the cross members are displaced independently of one another in the aforesaid first direction, and the clamping devices are displaced independently of one another in the aforesaid second direction according to the shape and dimensions of the component to be machined and/or to the machining to be carried out.

The machine further comprises at least one operating unit on which at least one tool can be engaged, the said operating unit being displaced, during a subsequent step of machining of the component and by means of a third actuator device, in the aforesaid first and/or second directions to bring the tool into contact with the component itself.

The presence of the first and second actuator devices, which are basically used only during the aforesaid step of tooling of the machine, and of the third actuator device, which is used basically only during the aforesaid step of machining of the component, renders the known machines of the type described above relatively complex and costly. Furthermore, known machines of the type described above present the additional drawback represented by the fact that movement of the aforesaid operating unit proves relatively complex on account of the relatively large weight and dimensions of the operating unit itself.

The purpose of the present invention is to provide a method for machining components made of wood or the like which will be free from the drawbacks described above and which will be simple and inexpensive to implement.

According to the present invention, a method for machining components made of wood or the like is provided in a machine comprising longitudinal guide members, at least two cross members, which are set on said longitudinal members and can be positioned along the longitudinal members themselves in a first given direction, at least one clamping device, which is mounted on each of said cross members and which can be positioned along the corresponding cross member in a second direction that is substantially transverse to said first direction for clamping at least one component to be machined, and at least one operating unit, on which at least one tool can be engaged; the method comprising a tooling step, in which said cross members are displaced independently of one another in said first direction by means of first actuator means, and said clamping devices are displaced independently of one another in said second direction by means of second actuator means according to the shape and dimensions of the component and/or to the machining to be carried out; a step of clamping of the component to render said component fixed to said clamping devices; and a step of machining of said component using said tool; said method being characterized in that, during said machining step, said cross members are displaced in said first direction according to respective mutually identical first laws of motion by means of said first actuator means, and said clamping devices are displaced in said second direction according to respective mutually identical second laws of motion by means of said second actuator means, in order to bring said component into contact with said tool.

The present invention moreover relates to a machine for machining components made of wood or the like.

According to the present invention, a machine is provided for machining components made of wood or the like, which comprises longitudinal guide members; at least two cross members, which are set on said longitudinal members; at least one clamping device, which is mounted on each of said cross members for clamping at least one component to be machined; at least one operating unit, on which at least one tool can be engaged; first actuator means for positioning the cross members along the longitudinal members in a first given direction; and second actuator means for positioning the clamping devices along the corresponding cross members in a second direction substantially transverse to said first direction; said first and second actuator devices being designed to displace, during a step of tooling of the machine, said cross members independently of one another and, respectively, said clamping devices independently of one another in said second direction according to the dimensions and shape of said component and/or to the machining to be carried out; said machine being characterized in that it further comprises logic control means designed to control selectively said first and second actuator means for displacing said cross members in said first direction according to respective mutually identical first laws of motion, and said clamping devices in said second direction according to respective mutually identical second laws of motion, in order to bring said component into contact with said tool during a step of machining of the component itself.

The present invention will now be described with reference to the annexed drawings, which illustrate a non-limiting example of embodiment thereof, in which:
- Figure 1 is a plan view of a preferred embodiment of the machine according to the present invention;
- Figure 2 is a side view of the machine illustrated in Figure 1;
- Figure 3 is a plan view of the machine of Figure 1, shown in a different operating position;
- Figure 4 is a plan view of a further embodiment of the machine according to the present invention;
- Figure 5 is a side view of the machine illustrated in Figure 4;
- Figure 6 is a side view of a first detail of Figures 4 and 5, shown in two different operating positions; and
- Figure 7 is a variant of a second detail of Figures 4 and 5.

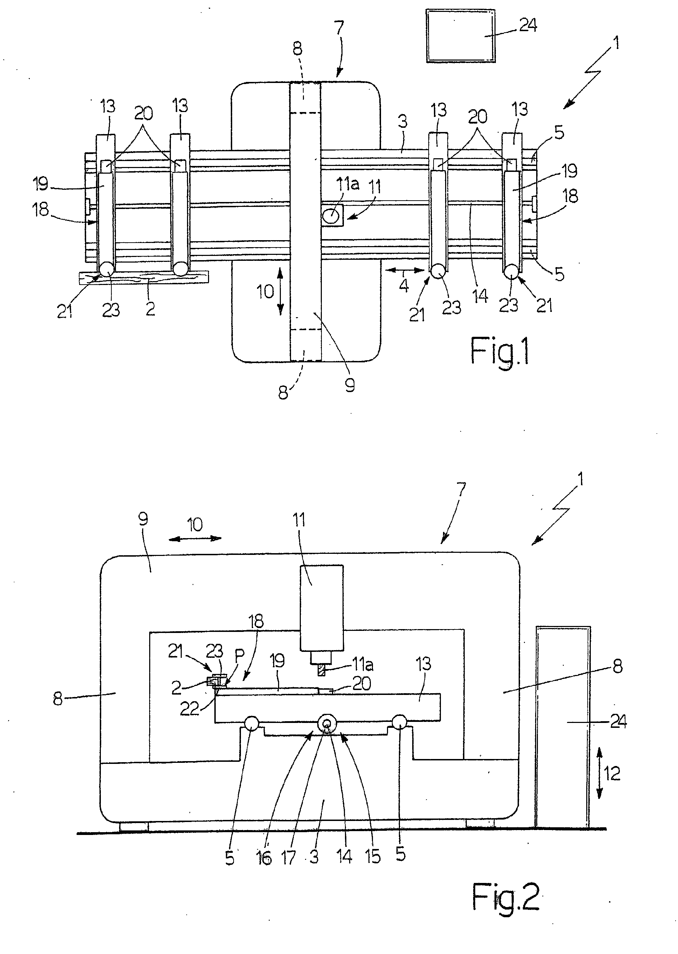

With reference to Figures 1 and 2, the reference number 1 designates, as a whole, a machine for machining components 2 made of wood or the like, comprising an elongated machine bed 3, which extends in a given direction 4, is substantially U-shaped, and has two side longitudinal members extending parallel to the direction 4.

The machine 1 further comprises a fixed overhead travelling crane 7, which in turn comprises two vertical uprights 8, which extend upwards starting from the machine bed 3 and carry, connected thereto, at respective free ends, a cross member 9, which extends above the machine bed 3 in a horizontal direction 10 transverse to the direction 4.

The cross member 9 supports at least one operating head 11 comprising at least one tool-holder spindle (not illustrated) on which a tool 11a can be engaged, mounted in a known way on the operating head 11 for displacement in a vertical direction 12 orthogonal to the directions 4 and 10.

According to variants (not illustrated), the machine 1 may comprise further operating heads 11 variously arranged and mounted on the machine bed 3 and/or on the overhead travelling crane 7.

The machine 1 is further provided with a plurality of cross members 13, each of which is defined by a respective substantially rectangular box section, designated in what follows by the term "working surfaces". Each working surface 13 extends between the longitudinal members 5 in the direction 10, is slidably coupled to the longitudinal members 5 and is further coupled to a screw 14, which is common to all the working surfaces 13, by means of an external thread-internal thread coupling 15 of a corresponding actuating device 16, a motor of which (of a known type and not illustrated) sets in rotation an internal screw 17 supported so that it can turn by the working surface 13 for imparting on the working surface 13 itself rectilinear displacements along the longitudinal members 5 in the direction 4.

The working surfaces 13 support a plurality of clamping devices 18, each of which comprises a respective slide 19, which is coupled in a known way to the corresponding working surface 13 for being displaced, by means of an actuating device 20 of a known type, along the corresponding working surface 13, and a respective clamping member 21 carried by the slide 19.

The clamping device 21 comprises a bottom jaw 22, which is fixed to the slide 19 and is substantially co-planar to the jaws 22 of the other clamping members 21 in order to define, with the jaws 22 of the other clamping members 21, a resting surface P designed for supporting at least one component 2, and a mobile top jaw 23 which can move, with respect to the jaw 22 and under the thrust of an actuator device (not illustrated), in the direction 12 away from and towards an operating position for gripping of the component 2 between the jaws 22 and 23.

According to a variant (not illustrated) the devices 18 comprise respective top resting plates, which are slidably mounted on the corresponding working surfaces 13, are co-planar with respect to one another for defining the resting plane P, and are connected to a suction device of a known type for clamping and withholding the component 2 on the resting surface P itself.

Finally, the machine 1 comprises an electronic control unit 24, designed, in use, to control selectively the modes of operation of the actuating devices 16 of the working surfaces 13 and of the actuating devices 20 for actuating the slides 19.

In use, during an initial step of tooling of the machine 1, the working surfaces 13 are displaced independently of one another along the longitudinal members 5, in the direction 4, and the clamping devices 18 are displaced independently of one another along the corresponding working surfaces 13, in the direction 10, according to the shape and dimensions of the component 2 to be machined and/or to the machining to be carried out.

At this point, the component 2 is set on the resting surface P manually or using a loading device of a known type and not illustrated, and the top jaws 23 are displaced into their operating gripping positions for rendering the component 2 fixed to the clamping devices 18.

During a subsequent machining step and under the control of the control unit 24, the working surfaces 13 are displaced along the longitudinal members 5 in the direction 4 according to respective mutually identical laws of motion, and the slides 19 are displaced along the corresponding working surfaces 13 in the direction 10 according to respective mutually identical laws of motion in such a way that, by combining the displacements of the working surfaces 13 in the direction 4 with the displacements of the slides 19 in the direction 10, the component 2 is brought into contact with the tool 11a for carrying out machining of the component 2.

From what has been outlined above, it follows that the machine 1 presents the advantage represented by the fact that the actuating devices 16 of the working surfaces 13 and the actuating devices 20 of the slides 19, which are necessary during the step of tooling of the machine 1, are used also during the step of machining of the component 2 for displacing the component 2 so that it comes into contact with the tool 11a, thus preventing the need to mount on the machine 1 additional actuating devices designed to displace the overhead travelling crane 7 and the operating head 11, respectively, in the direction 4 and in the direction 10 during the machining step.

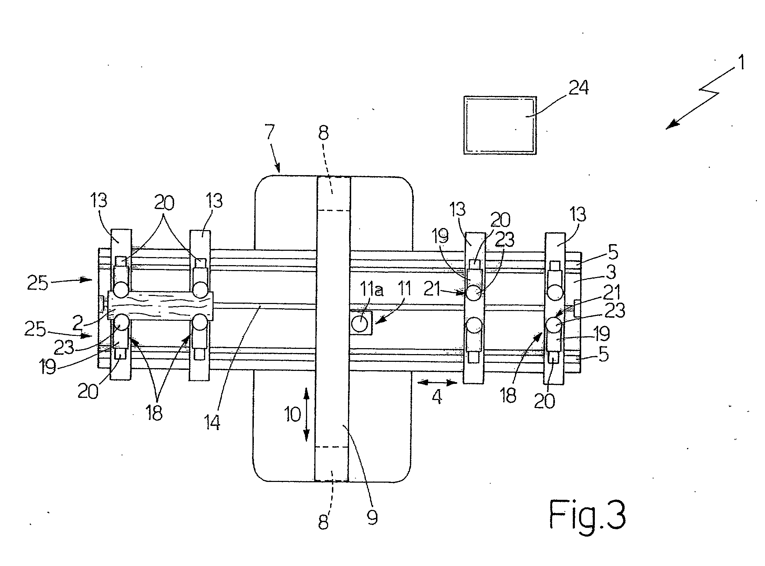

With reference to Figure 3, the working surfaces 13 can be provided with respective pairs of clamping devices 18, which can be divided into two sets 25 of devices 18 set on opposite sides of the component 2 in the direction 10. In this way, it is possible to carry out, alternately, machining of two opposite sides of the component 2, transferring the component 2 between the devices 18 of one set 25 and the devices 18 of the other set 25.

According to a first variant (not illustrated), the working surfaces 13 can be divided into at least two sets of working surfaces 13, each one of which can be associated to a respective component 2 so as to be able to perform a step of loading or unloading of the working surfaces 13 of one set of working surfaces 13 during the step of machining of the component 2 carried by the working surfaces 13 of the other set of working surfaces 13.

According to a second variant (not illustrated), the working surfaces 13 can be divided into at least two sets of working surfaces 13, each one of which can be associated to a respective component 2, and the machine 1 is provided with two operating heads 11 designed to carry out machining of two components 2 simultaneously.

According to a third variant (not illustrated), the machine 1 is provided with two operating heads 11, one of which carries out machining of a component 2 and, at the same time, the other performs a step of tool change.

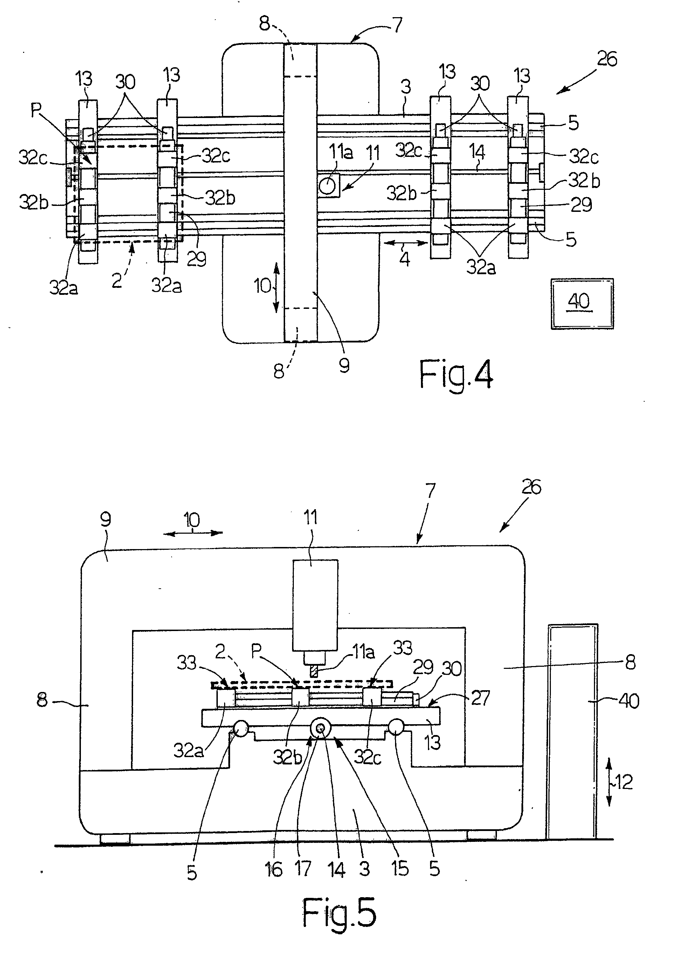

Figures 4 and 5 illustrate a machine 26, which differs from the machine 1 in that each working surface 13 is delimited at the top by a substantially horizontal plane surface 27, is provided with a pair of guides 28 mounted on the surface 27 parallel to the direction 10, and supports, in the case in point, a slide 29, which is substantially T-shaped, is slidably coupled to the guides 28 so as to perform rectilinear displacements along the guides 28 and under the thrust of an actuating device 30 of a known type, and is provided with a pair of guides 31 mounted on the slide 29 parallel to the direction 10.

The slide 29 is moreover provided with a plurality of resting blocks 32 (in the case in point, three resting blocks 32), one of which (designated in what follows by 32a) is fixed to a free end of the slide 29, and the other two (hereinafter designated by 32b and 32c) are slidably coupled to the guides 31 to perform rectilinear displacements along the guides 31 according to modalities that will be illustrated in greater detail in what follows.

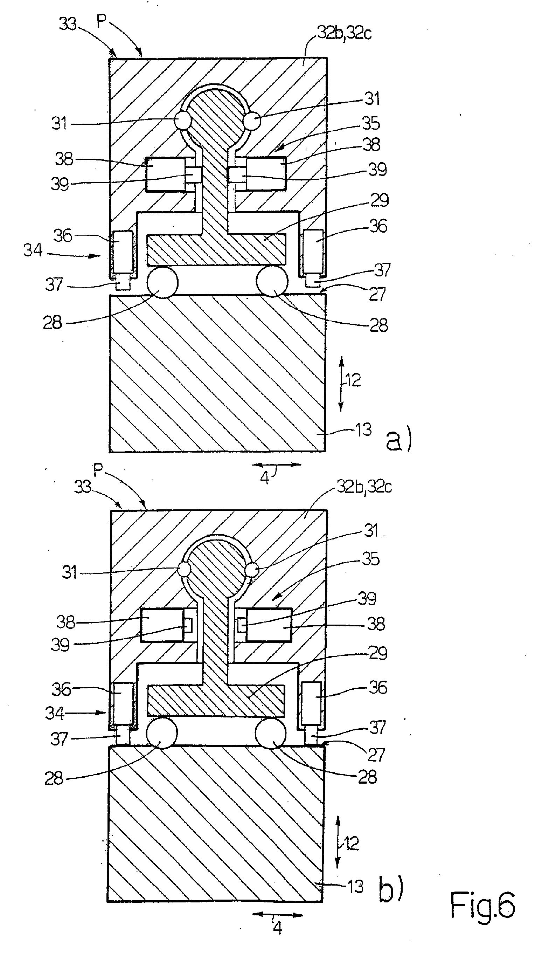

With reference to Figure 6, each block 32a, 32b, 32c is substantially C-shaped, extends around the slide 29 with its concavity facing downwards, and is delimited at the top by a plane surface 33, which is substantially horizontal and parallel to the surface 27, defines, with the other surfaces 33, the resting surface P for at least one component 2, and is connected in a known way to a pneumatic suction device (not illustrated) designed to clamp the component 2 on the surface 33.

Each block 32b, 32c is selectively clamped along the working surface 13 and the slide 29, respectively, by means of a first clamping device 34 and a second clamping device 35, respectively.

In the case in point, the device 34 comprises two actuator cylinders 36, which are housed inside the block 32b, 32c on opposite sides of the slide 29 in the direction 4, extend in the direction 12 and above the surface 27, each of them having a respective output rod 37 that can move between a retracted resting position, in which it is set substantially inside the corresponding cylinder 36 at a given distance from the surface 27 and an extracted clamping position, in which it is set substantially outside the corresponding cylinder 36 for engaging the surface 27 and hence clamping the block 32b, 32c along the working surface 13.

In the case in point, the device 35 comprises two actuator cylinders 38, which are housed inside the block 32b, 32c on opposite sides of the slide 29 in the direction 4, extend in the direction 4, face one another and the slide 29, each of them having a respective output rod 39 that can move between a retracted resting position, in which it is set substantially inside the corresponding cylinder 38 at a given distance from the surface 29 and an extracted clamping position, in which it is set substantially outside the corresponding cylinder 38 for engaging the slide 29 and hence clamping the block 32b, 32c along the slide 29 itself.

According to a variant (not illustrated), each resting block 32a, 32b, 32c is replaced by a clamping member, one bottom jaw 22 is coupled in a slidable or axially fixed way to the slide 29 and is substantially co-planar to the bottom jaws of the other clamping members in order to define the resting surface P, and one top jaw of which can move, with respect to the bottom jaw in the direction 12 away from and towards an operating position for gripping of the component 2 between the bottom and top jaws.

Finally, the machine 26 comprises an electronic control unit 40, designed to control selectively the modes of operation of the clamping devices 34, 35 of each block 32b, 32c of the devices of the working surfaces 13 and of the actuating devices 30 of the slides 29.

In use, during an initial step of tooling of the machine 26, the working surfaces 13 are displaced independently of one another along the longitudinal members 5 in the direction 4, and the resting blocks 32a, 32b, 32c are displaced independently of one another along the working surfaces 13 in the direction 10 according to the shape and dimensions of the component to be machined and/or to the machining to be carried out.

The displacement of the resting blocks 32a, 32b, 32c along the corresponding working surfaces 13 during the aforesaid step of tooling of the machine 26 will now be described, considering the blocks 32a, 32b, 32c of just one working surface 13 and of just one slide 29 and starting from an instant in which the blocks 32b, 32c are fixed to the slide 29, i.e., starting from an instant in which the output rods 37 of the actuator cylinders 36 are set in their retracted resting positions and the output rods 39 of the actuator cylinders 38 are set in their extracted clamping positions (Figure 6a).

At this point, the slide 29 considered is displaced in the direction 10 so as to position the block 32b in a given position along the working surface 13; and the block 32b is clamped along the working surface 13, displacing the corresponding rods 37 into their extracted clamping positions and the corresponding rods 39 into their retracted resting positions (Figure 6b).

Subsequently, the slide 29 considered is once again displaced in the direction 10 so as to engage the block 32b slidably and to position the block 32c in a given position along the working surface 13; and the block 32c is clamped along the working surface 13, displacing the corresponding rods 37 in their extracted clamping positions and the corresponding rods 39 in their retracted resting positions (Figure 6b).

The slide 29 considered is finally displaced in the direction 10 so as to engage the blocks 32b and 32c slidably and to position the block 32a in a given position along the working surface 13.

Once the step of tooling of the machine 26 is terminated, the component 2 is set on the plane P manually or by means of a loading device of a known type and not illustrated; the aforementioned pneumatic suction device is activated for clamping the component 2 on the plane P; and the blocks 32b and 32c of each slide 29 are released from the respective working surface 13 and clamped on the respective slide 29.

During a subsequent machining step and under the control of the electronic control unit 40, the working surfaces 13 are displaced along the longitudinal members 5 in the direction 4 according to respective mutually identical laws of motion by means of the devices16 already used in the tooling step, and the slides 29 are displaced along the respective working planes 13 in the direction 10 according to respective mutually identical laws of motion by means of the devices 30 already used in the tooling step in such a way that, combining the displacements of the working surfaces 13 in the direction 4 with the displacements of the slides 29 in the direction 10, the component 2 is brought into contact with the tool 11a in order to carry out machining of the component 2 itself.

From what has been said above, it follows that the machine 26 presents the advantage represented by the fact that all the resting blocks 32a, 32b, 32c associated to each working surface 13 can be positioned along the working surface 13 itself by means of a single actuating device, namely, the actuating device 30 of the corresponding slide 29.

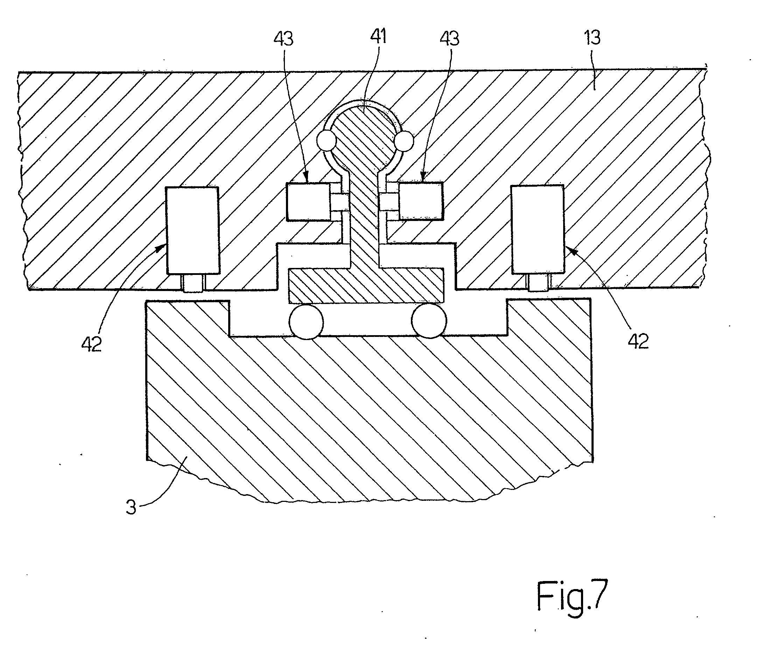

The variant of Figure 7 differs from what is illustrated in Figures 4 and 5 in that, therein, the screw 14 and the actuating devices 16 are eliminated and replaced by a slide 41, which extends in a direction 4, is slidably coupled to the machine bed 3 for performing rectilinear displacements along the machine bed 3, under the thrust of an actuating device (of a known type and not illustrated), and is slidably engaged through the working surfaces 13, each of which is provided with two clamping devices 42, 43 similar to the devices 34, 35 and designed to clamp selectively the corresponding working surfaces 13 along the machine bed 3 and, respectively, along the slide 41, under the control of the control unit 40 and according to the same operating modes as the ones described for clamping each block 32b, 32c along the corresponding slide 29 and along the corresponding working surface 13.

## Claims

1. A method for machining components (2) made of wood or the like in a machine which comprises longitudinal guide members (5), at least two cross members (13), which are set on said longitudinal guide members (5) and can be positioned along the longitudinal members (5) themselves in a first given direction (4), at least one clamping device (18; 32), which is mounted on each of said cross members (13) and which can be positioned along the corresponding cross member (13) in a second direction (10) that is substantially transverse to said first direction (4), for clamping at least one component (2) to be machined, and at least one operating unit (11), on which at least one tool (11a) can be engaged; the method comprising a tooling step, in which said cross members (13) are displaced independently of one another in said first direction (4) by means of first actuator means (16; 41), and said clamping devices (18; 32) are displaced independently of one another in said second direction (10) by means of second actuator means (20; 30) according to the shape and dimensions of said component (2) and/or to the machining to be carried out; a step of clamping of the component (2) to render said component (2) fixed to said clamping devices (18; 32); and a step of machining of said component (2) using said tool (11a); said method being **characterized in that**, during said machining step, said cross members (13) are displaced in said first direction (4) according to respective mutually identical first laws of motion by means of said first actuator means (16; 41), and said clamping devices (18; 32) are displaced in said second direction (10) according to respective mutually identical second laws of motion by means of said second actuator means (20; 30), in order to bring said component (2) into contact with said tool (11a).

2. The method according to Claim 1, in which said tool (11a) is displaced in a third direction (12) substantially orthogonal to said first direction (4) and said second direction (10).

3. The method according to Claim 1 or Claim 2, in which said machine comprises at least two said operating units (11) and a plurality of said cross members (13), which can be divided into at least two sets of cross members (13), each one of which is associated to a respective said component (2); the step of machining of one of said components (2) being performed during the step of machining of the other of said components (2).

4. The method according to any one of the preceding claims, in which said machine comprises at least two said operating units (11); the method envisaging replacement of the tool (11a) of one of said operating units (11) during the step of machining of the other of said operating units (11).

5. The method according to any one of the preceding claims, in which said machine comprises a plurality of said cross members (13), which can be divided into at least two sets of cross members (13); the step of machining of the component (2) carried by one of said sets of cross members (13) being performed during a step of loading or unloading of the other of said sets of cross members (13).

6. The method according to any one of the preceding claims, in which said machine comprises a plurality of said clamping devices (18; 32), which can be divided into at least two sets (25) of clamping devices (18; 32); said component (2) being engaged simultaneously by the clamping devices (18; 32), of both sets (25) of clamping devices (18; 32) in order to transfer the component (2) from the clamping devices (18; 32) of one of the sets (25) of clamping devices (18; 32) to the clamping devices (18; 32) of the other set (25) of clamping devices (18; 32).

7. A machine for machining components (2) made of wood or the like, which comprises longitudinal guide members (5), at least two cross members (13) set on said longitudinal guide members (5); at least one clamping device (18; 32), which is mounted on each of said cross members (13) for clamping at least one component (2) to be machined, at least one operating unit (11), on which at least one tool (11a) can be engaged, first actuator means (16; 41) for positioning the cross members (13) along the longitudinal guide members (5) in a first given direction (4), and second actuator means (20; 30) for positioning the clamping devices (18; 32) along the respective cross members (13) in a second given direction (10), that is substantially transverse to said first direction (4); said first and second actuator means (16; 41, 20; 30) being designed to displace, during the machine-tooling step said cross members (13) independently of one another in said first direction (4), and, respectively, said clamping devices (18; 32) independently of one another in said second direction (10) according to the shape and dimensions of said component (2) and/or to the machining to be carried out; said machine being **characterized in that** it further comprises logic control means (24; 40) designed for controlling selectively said first and second actuator means (16; 41, 20; 30) for displacing said cross members (13) in said first direction (4) according to respective mutually identical first laws of motion and said clamping devices (18; 32) in said second direction (10) according to respective mutually identical second laws of motion, in order to bring said component (2) into contact with said tool (11a) during a step of machining of the component (2).

8. The machine according to Claim 7, in which said machine further comprises third actuator means for displacing said tool (11a) in a third direction (12) substantially orthogonal to said first direction (4) and said second direction (10).

9. The machine according to Claim 7 or Claim 8, in which said first actuator means (16; 41) comprise a first actuating device (16) for each of said cross members (13).

10. The machine according to Claim 7 or Claim 8, in which said first actuator means (16; 41) comprise at least a second actuating device (41) designed to displace at least two cross members (13) in said first direction (4).

11. The machine according to any one of Claims 7 to 10, in which said second actuator means (20; 30) comprise a third actuating device (20) for each of said clamping devices (18).

12. The machine according to any one of Claims 7 to 10, in which said second actuator means (20; 30) comprise, for each of said cross members (13), at least one fourth actuating device (30) designed to displace at least two clamping devices (32) in said second direction (10).
